Europäisches Patentamt

European Patent Office

Office européen des brevets

(11) Veröffentlichungsnummer: **0 603 635 A2**

# EUROPÄISCHE PATENTANMELDUNG

(21) Anmeldenummer: **93119729.7**

(51) Int. Cl.5: **H04J 3/06**

(22) Anmeldetag: **08.12.93**

(30) Priorität: **22.12.92 DE 4243441**

(43) Veröffentlichungstag der Anmeldung:
**29.06.94 Patentblatt 94/26**

(84) Benannte Vertragsstaaten:
**AT BE CH ES FR GB LI NL**

(71) Anmelder: **ANT Nachrichtentechnik GmbH**
**Gerberstrasse 33**
**D-71522 Backnang(DE)**

(72) Erfinder: **Bubeck, Helmut, Dipl.-Ing. (BA)**
**Asterweg 3**
**D-71706 Markgröningen(DE)**
Erfinder: **Dressler, Robert, Dipl.-Ing.**
**Föhrichstrasse 44**
**D-70469 Stuttgart(DE)**
Erfinder: **Müller-Cajar, Heiko, Dipl.-Ing.**
**Heimweg 11**
**D-71577 Grosserlach(DE)**

(54) **Zeitmultiplex-Übertragungssystem mit Laufzeitausgleich.**

(57) Bei Zeitmultiplex-Übertragungssystemen für Daten, die in Zeitkanälen eines Rahmens untergebracht sind, ist es bekannt, in den Netzknoten die Datenströme jeweils so zu verzögern, daß sie rahmensynchron zusammengefaßt werden können.

Eine solche rahmensynchrone Zusammenfassung der Datenströme hat den Nachteil, daß die Systemlaufzeiten sehr hoch werden und die Verfügbarkeit sinkt.

Durch eine zeitkanalsynchrone Zusammenfassung der Datenströme können die Systemlaufzeiten vermindert werden. In den Netzknoten sind dazu Laufzeitausgleichseinheiten (LZS) vorgesehen, die die empfangenen Datenströme höchstens um die Dauer von wenigen Zeitkanälen verzögern.

Busstation

Fig. 5

Die Erfindung geht aus von einem Übertragungssystem gemäß dem Oberbegriff des Patentanspruches 1.

Aus NTG Fachberichte, Band 80, März 1982, Seiten 157 bis 164 ist ein digitales Zeitmultiplex-Übertragungssystem bekannt, welches als linienwie auch als sternförmiges synchrones Verzweigungsnetz aufgebaut werden kann. An eine zentrale Busstation werden dezentrale Busstationen beispielsweise über jeweils ein Schleifennetz angeschlossen. An die dezentralen Busstationen können jeweils mehrere Teilnehmer angeschlossen werden. Jeder Teilnehmer kann in diesem DIKOS-System gleichberechtigt einen Verbindungswunsch absetzen. Die Teilnehmer in jedem Schleifennetz können in Zeitkanälen eines Rahmens Daten empfangen und absenden. Der die dezentralen Busstationen eines Teilnetzes verbindende Bus besteht aus einer Sende- und einer Empfangsleitung.

Die von den Busstationen in eine Sendeleitung eingespeisten Informationen werden an einer Datenumleitstelle in die Empfangsleitung der jeweiligen Teilnetze umgeleitet, aus der die Busstationen die an sie gerichteten Daten entnehmen. Die Übertragung erfolgt im Zeitmultiplex, so daß dieses System eine Taktzentrale und einen Rahmensynchronisiergenerator erfordert, die zweckmäßigerweise in der zentralen Busstation untergebracht sind. Jeder Sendeleitung ist eine Laufzeitausgleichseinheit in Form eines Laufzeitspeichers Zugeordnet, der die Laufzeitunterschiede zwischen dem Rahmen auf der Sendeleitung und dem Rahmen vom Rahmensynchronisiergenerator anpaßt. Jede Teilnehmerstation empfängt die Summe aller im Netz vorhandenen Daten, wertet jedoch nur diejenigen aus, die an sie adressiert sind. Die von einer Busstation auszusendenden Daten werden bei DIKOS (s. auch NTZ, Band 34, 1981, Heft 10, Seite 658 bis 663) stets im gleichen Seitkanal auf der Sendeleitung eingespeist und damit auf dem gleichen Seitkanal (Zeitschlitz) wiedergefunden. Um Doppelbelegungen eines Zeitkanals zu vermeiden, sucht zu Beginn einer Verbindung der initiierende Teilnehmer auf der Empfangsleitung einen freien Zeitkanal und sendet, wenn dieser gefunden ist, im selben Zeitkanal der Sendeleitung einen Ruf an einen gewünschten anderen Teilnehmer. Die Summe aller übertragenen Daten wird in der gleichen Reihenfolge auf der Empfangsleitung zu den Teilnehmern übertragen.

Bei Netzverzweigungen werden die Sendedatenströme rahmensynchron zusammengefaßt und zur zentralen Busstation übertragen, welche diese zusammengefaßten Datenströme wiederum in alle Teilnetze einspeist. Damit sind die im Sendeweg eingeschleusten Daten im Empfangsweg in demselben Zeitkanal zu empfangen.

Aufgabe vorliegender Erfindung ist es, gewisse Nachteile dieses Zeitmultiplex-Übertragungssystems zu überwinden. Insbesondere sollen die Systemlaufzeiten verkürzt werden. Diese Aufgabe wird durch die Maßnahmen des Anspruchs 1 gelöst. Die Unteransprüche zeigen vorteilhafte Ausgestaltungen auf.

Der Nachteil des aus vorgenannter Veröffentlichung bekannten Zeitmultiplex-Übertragungssystems ist insbesondere darin zu sehen, daß es in den Verzweigungen (Netzknoten) zu Laufzeiten von bis zu einem Rahmen kommt. Die Anzahl der Verzweigungen (Netzknoten) in der direkten Verbindung zur taktgebenden Station, multipliziert mit der Zeitdauer eines Rahmens, ergibt die Laufzeit eines Datums nach Aussenden bis zum Empfang im Empfangsrahmen. Diese Systemlaufzeit verlängert die Verbindungsaufbauzeiten von Sprach- und Datenverbindungen erheblich, zudem eventuell auftretende Kollisionen unter zusätzlichem Zeitaufwand aufzulösen sind. Hauptsächlich bei breitbandigen Datenübertragungen kommt es zu Wartezeiten oder Datenverlust bei den Endgeräten.

Durch die zeitkanalsynchrone Zusammenfassung der Datenströme in den Netzknoten wird die Verweildauer der einzelnen Zeitkanäle in der Laufzeitausgleichseinheit erheblich reduziert und damit die Systemlaufzeit insgesamt verkürzt. Da Kollisionen erst nach Ablauf der Systemlaufzeit erkannt werden, ist beim Zeitmultiplex-Übertragungssystem nach der Erfindung ein neuer Belegungsversuch bereits nach kurzer Zeit möglich. Jeder Netzteilnehmer erhält durch die kurze Systemlaufzeit eine längere Verarbeitungszeit (Verarbeitungszeit = Rahmendauer - Systemlaufzeit) bis zum nächsten Zugriff auf den/die zugeordneten Zeitkanal/Zeitkanäle.

Anhand der Zeichnungen werden nun Ausführungsbeispiele der Erfindung im Vergleich zu einem bisherigen Zeitmultiplex-Übertragungssystem erläutert. Es zeigen beispielhaft

Fig. 1 den Aufbau eines Zeitmultiplexrahmens,
Fig. 2 ermittelte Laufzeiten für ein bisheriges Zeitmultiplex-Übertragungssystem,
Fig. 3 die Zusammenfassung der Daten aus Teilnetzen bei einer Verzweigung,
Fig. 4 ein Beispiel für eine Netztopologie,
Fig. 5 ein Blockschaltbild einer Busstation,
Fig. 6 Einzelheiten einer Busstation,
Fig. 7 die Initialisierung des Empfangspuffers einer Busstation,
Fig. 8 die Systemlaufzeiten für ein Zeitmultiplex-Übertragungssystem nach der Erfindung,
Fig. 9 den Zeitversatz der Rahmen für 6 Busstationen.

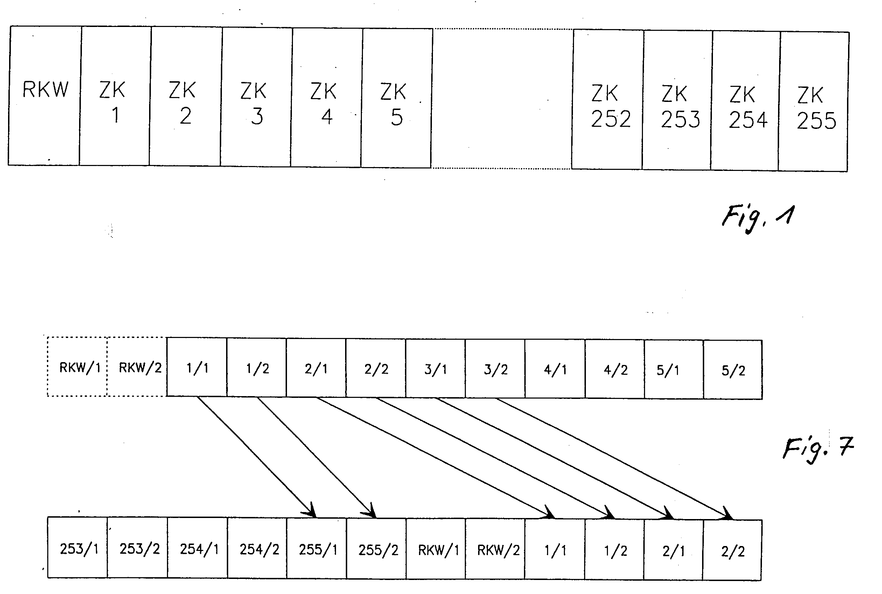

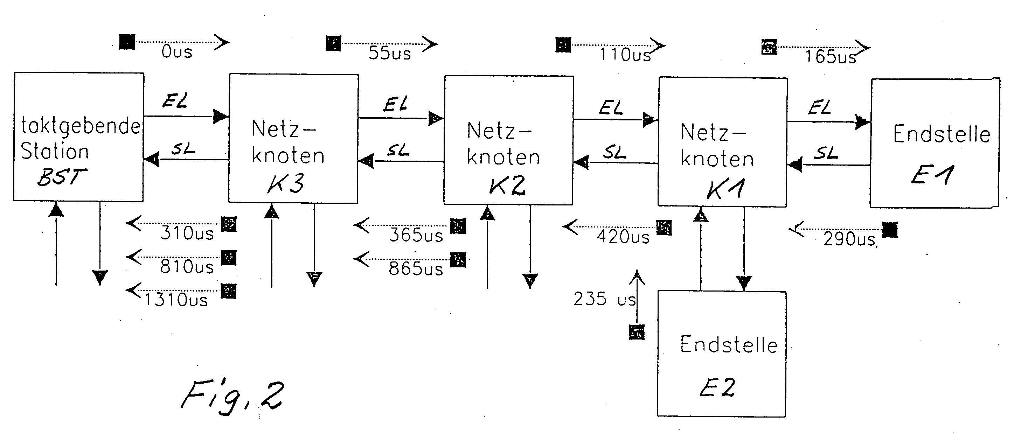

Fig. 1 zeigt den Aufbau eines Zeitmultiplexrahmens, wie er üblicherweise für Zeitmultiplex-Übertragungssysteme verwendet wird. In diesem Beispiel umfaßt der Rahmen insgesamt 256 Zeitkanäle (Zeitschlitze). Der erste Zeitkanal eines Rahmens ist jeweils mit dem Rahmenkennungswort RKW belegt, so daß 255 Nutzkanäle ZK1 bis ZK255 zur Verfügung stehen. Die Gesamtbitrate beträgt 9,216 MBit/s. Auf einen Zeitkanal entfallen 18 Bit und die Bitrate pro Zeitkanal beträgt 32 kBit/s.

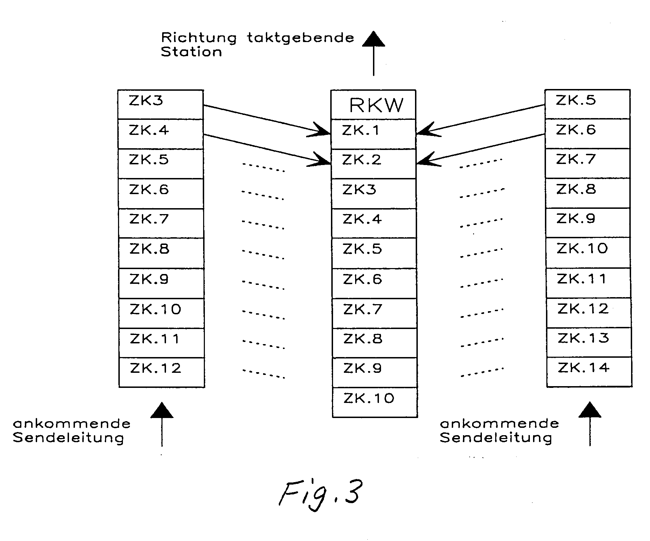

Um ein Maß für die Systemlaufzeiten zu erhalten, sind in Fig. 2 die Systemlaufzeiten des bekannten DIKOS-Zeitmultiplexsystems mit rahmensynchroner Verarbeitung dargestellt. Im dargestellten Beispiel sind zwischen der taktgebenden Busstation und zwei Endstellen drei Verzweigungen (Netzknoten) vorgesehen. Die Verbindung erfolgt jeweils über einen Datenbus mit Sendeleitung SL und Empfangsleitung EL. Die punktierten Pfeile kennzeichnen jeweils die Zeitpunkte, an denen ein Rahmen vom entsprechenden Punkt (Netzknoten, Endstelle) ausgesendet wird. Der Zeitnullpunkt ist durch das Aussenden eines Rahmens durch die taktgebende Busstation bestimmt.

In der Endstelle (Teilnehmer) E1 werden die Daten zum Zeitpunkt 290 $\mu$s in den Rahmen eingeschleust. Der erste Netzknoten K1 sendet den Rahmen zum Zeitpunkt 420 $\mu$s aus. Beim zweiten Knoten K2 ist der Rahmen bereits zum Zeitpunkt 365 $\mu$s ausgesendet worden, so daß hier auf den nächsten Rahmen bei 865 $\mu$s gewartet werden muß. Der letzte Netzknoten K3 sendet die Daten zum Zeitpunkt 1310 $\mu$s an die taktgebende Busstation BST. Der nächste Rahmen geht zum Zeitpunkt 1500 $\mu$s von der taktgebenden Busstation BST ab und erreicht die Endstelle E1 nach 1665 $\mu$s (die Pfeile in Fig. 2 geben jeweils die summierten Laufzeiten an). Die Systemlaufzeit vom Aussenden bis zum Empfang beträgt für die Endstelle E1 demnach insgesamt:

1665 $\mu$s - 290 $\mu$s = 1375 $\mu$s,

was der Dauer von ca. drei Rahmen entspricht.

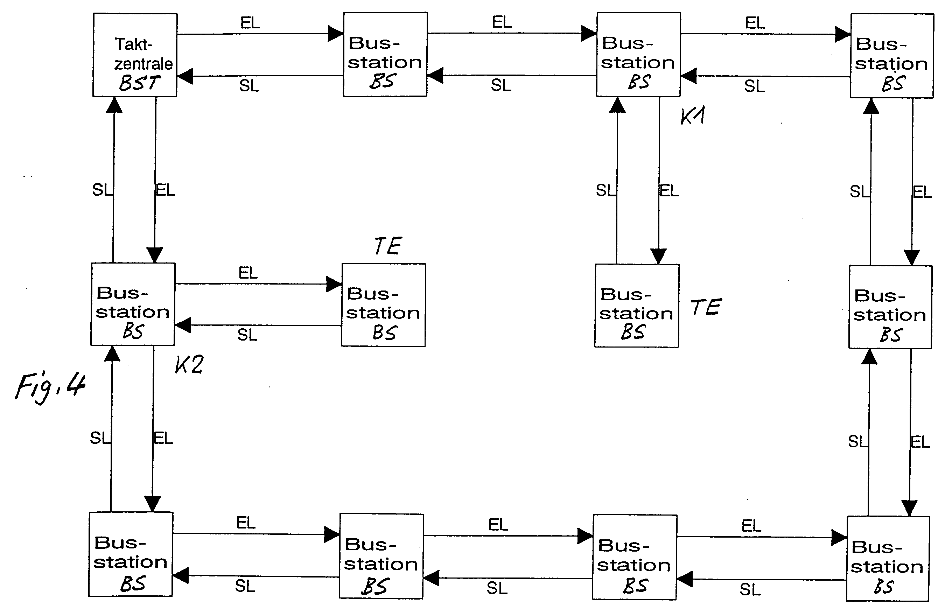

Fig. 3 zeigt die Zusammenfassung der Daten nach der Erfindung. Anstelle einer rahmensynchronen Zusammenfassung wird eine zeitkanalsynchrone Zusammenfassung der Daten, d.h. eine Zusammenfassung der Rahmen in den Teilnetzen im Zeitkanalraster, jeweils bei einer Verzweigung (Netzknoten) vorgenommen und der zusammengefaßte Datenstrom in einem neuen Rahmen, der von einer Busstation beim Netzknoten vorgegeben wird, zur zentralen taktgebenden Busstation übertragen, welche diesen Rahmen wiederum in alle an die zentrale taktgebende Busstation BST angeschlossenen Teilnetze einspeist.

Fig. 4 zeigt ein Beispiel für eine Netztopologie eines Zeitmultiplex-Übertragungssystems, bei dem die Erfindung einsetzbar ist. Es sind dort mehrere Netzknoten K1, K2 vorhanden, an denen jeweils eine Busstation BS vorgesehen ist. Vorteilhafterweise wird das Übertragungssystem aus gleich aufgebauten Busstationen gebildet, die durch entsprechende Einstellung oder Steuerung als taktgebende Station BST, als Verzweigung bzw. Netzknoten oder als Teilnehmerendstelle TE betreibbar sind. An jede dieser Stationen kann außerdem ein Teilnetz mit einem oder mehreren Teilnehmern angeschlossen sein.

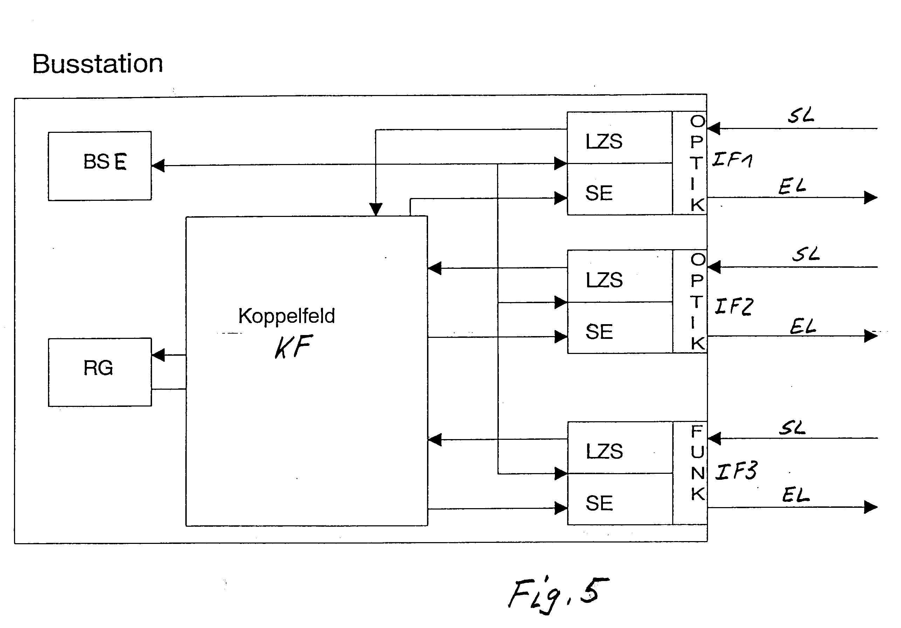

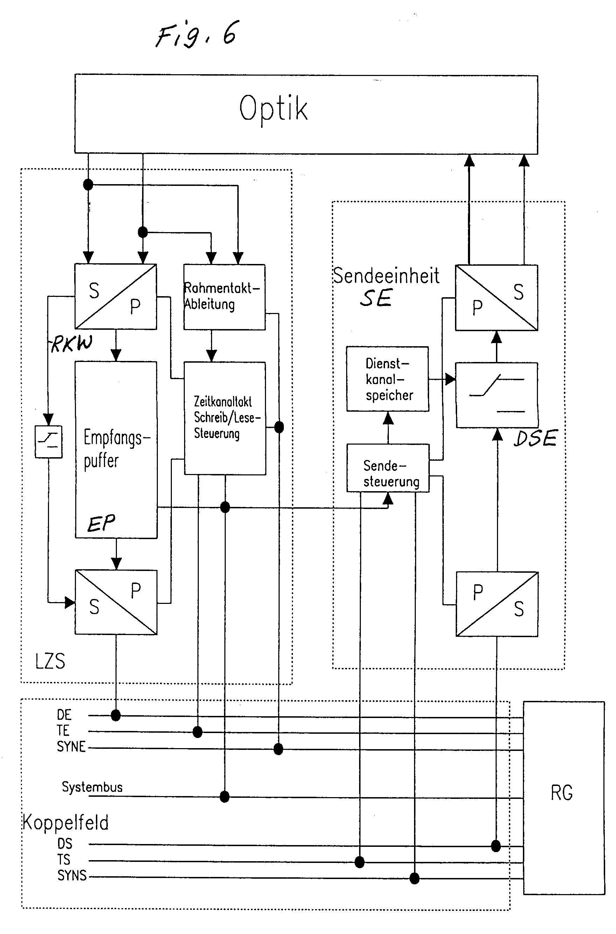

Fig. 5 zeigt ein Blockschaltbild für solch eine Busstation. Je nach Anzahl der in einer Verzweigung (Netzknoten) zusammenlaufenden Teilnetze (Busse jeweils bestehend aus Sende- und Empfangsleitung SL bzw. SE) und dem zu einem weiteren Netzknoten oder zur taktgebenden Busstation BST führenden Bus sind entsprechend viele Interface-Schaltungen, im Beispiel IF1, IF2, IF3, vorgesehen, die jeweils aus einer Laufzeitausgleichseinheit LZS, einer Sendeeinheit SE und einer übertragungsmediumgeeigneten Ausgangsstufe, hier mit Optik bzw. Funk bezeichnet, bestehen. Die Ausgänge aller Laufzeitausgleichseinheiten LZS sind über ein Koppelfeld KF mit den Sendeeinheiten SE ihrer eigenen Interface-Schaltungen sowie den Sendeeinheiten SE der anderen Interface-Schaltungen verbindbar. Das Koppelfeld KF wird über einen Rahmengenerator RG gesteuert. Die Steuerung der Laufzeitausgleichseinheiten LZS und der Sendeeinheiten SE erfolgt über die Bussteuerung BSE. Einzelheiten einer solchen Busstation sind in Fig. 6 dargestellt.

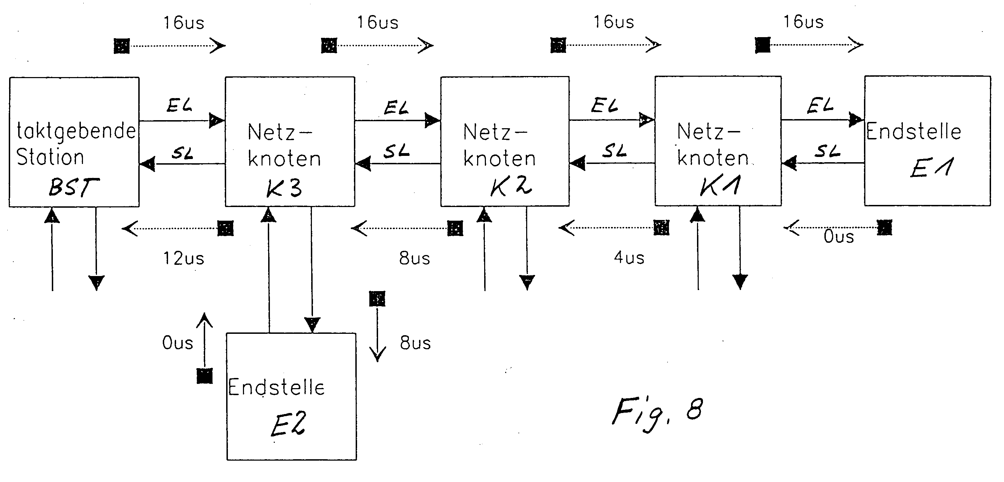

Für die erfindungsgemäße zeitkanalsynchrone Zusammenfassung der Daten wird jeder Zeitkanal nur um die Dauer weniger Zeitkanäle, im Ausführungsbeispiel maximal um die Dauer von zwei Zeitkanälen, entsprechend 3,906 $\mu$s, in einer Laufzeitausgleichseinheit LZS zwischengespeichert. Da der Rahmen auf dem Sendeweg, d.h. in Richtung taktgebende Busstation BST, insbesondere wenn kein fester Bezug zum Rahmen auf der Empfangsleitung EL vorhanden ist, können die Rahmen auf den Sendeleitungen SL eines Netzknotens beliebige Zeitverschiebungen annehmen. Dadurch werden in einem Netzknoten Zeitkanäle mit verschiedenen Nummern verknüpft (Fig. 3). Für die Verknüpfung der Zeitkanäle über die Laufzeitausgleichseinheiten LZS und das Koppelfeld KF werden im Netzknoten die Rahmenkennungsworte RKW der ankommenden Sendeleitungen ausgefiltert. Richtung taktgebende Busstation BST bildet sich der neue Zeitkanal ZK1 aus Zeitkanal 3 und Zeitkanal 5 zweier Sendeleitungen von unterschiedlichen Teilnetzen. Analog hierzu besteht der neue Zeitkanal 2 aus der Verknüpfung von Zeitkanal 4 und Zeitkanal 6. Für die Verzögerung der Rahmen um maximal zwei Zeitkanäle ist in jeder Laufzeitausgleichseinheit LZS ein Empfangspuffer EP mit ein- und ausgangsseitiger Serienparallelwandlungseinheit SP vorhanden. Außerdem ist eine Rahmentaktableitung und eine Aufbereitungsstufe für den Zeitkanaltakt, der die Serienparallelwandlungseinheiten SP steuert, und eine Schreib/Lesesteuerung für den Empfangspuffer EP vorgesehen. Die Rahmenkennungsworte RKW der ankommenden Datenströme werden nicht mit dem abgehenden Datenstrom in Richtung taktgebende Busstation BST verknüpft. Sie werden daher nicht im Empfangspuffer EP abgelegt und auch nicht zum Zeitpunkt des Rahmenkennungswortes RKW aus dem Empfangspuffer EP ausgelesen. Um einen definierten Zustand zwischen ankommendem und abgehendem Rahmen zu erhalten, muß der Empfangspuffer EP initialisiert werden. Dabei startet der erste Einschreibvorgang nach Neuinitialisierung mit dem Zeitkanal 1. Sobald dieser Zeitkanal komplett eingelesen ist, wird das Auslesen freigegeben. Fig. 7 zeigt die Initialisierung mit einem 9 Bit breiten Empfangspuffer EP in der Laufzeitausgleichseinheit. Die einzelnen Zeitkanäle sind in Teil 1 und 2 getrennt. Wie aus Fig. 7 abzuleiten ist, kann eine Laufzeitänderung < 9 Bit ausgeglichen werden. Erhöht sich die Laufzeit in Richtung taktgebender Busstation BST, so kann diese bis zum Pufferüberlauf ausgeglichen werden. Der Empfangspuffer EP sollte mindestens drei Zeitkanäle aufnehmen können.

Im Zeitraum zwischen Rahmenkennungswort RKW des ankommenden Datenstromes und dem Rahmenkennungswort RKW des abgehenden Datenstroms besteht eine Verzögerung von einem Zeitkanal. Nach dem abgehenden Rahmenkennungswort RKW wird der ankommende Datenstrom für die Dauer von zwei Zeitkanälen zwischengespeichert.

Über das Koppelfeld KF erfolgt die Einstellung einer Busstation im Netz. Neben der Zusammenfassung der Datenströme durch verdrahtete wiredor Verknüpfungen (logische ODER Funktion) aller Datenströme angeschlossener Teilnetze, hat dieses Koppelfeld KF noch folgende weitere Aufgaben:

- Einstellung von Fremdtakt- oder Eigenbetrieb,
- Transparentes Durchschalten von Sende- und Empfangsweg zur Realisierung einer Busstation mit minimaler Laufzeit (DBS Funktion).

Sendeweg:

DS - Sendedaten (Daten Richtung taktgebende Station),

TS - Sendetakt (synchroner Takt von Fremdtaktanschluß oder vom Rahmengenerator RF),

SYNS - Synchronisiersignal (z.B. Zeitkanaltakt mit Taktpause während eines Rahmenkennungswortes RKW).

Empfangsweg:

DE - Empfangsdaten (Daten von taktgebender Station),

TE - Empfangstakt (synchroner Takt von Fremdtaktanschluß oder vom Rahmengenerator RG),

SYNE - Synchronisiersignal (z.B. Zeitkanaltakt mit Taktpause während eines Rahmenkennungswortes RKW).

Auf dem Sendeweg findet die logische ODER-Verknüpfung der Daten von Interface und Laufzeitausgleichseinheit LZS (außer Fremdtaktanschluß) statt. Im Empfangsweg sendet der Fremdtaktanschluß die Daten, welche ungepuffert und unverändert an den anderen Anschlüssen ausgesendet werden. Im Eigenbetrieb der Station muß der Rahmengenerator RG die Sendedaten auf den Empfangsweg übertragen.

Der Rahmengenerator RG erzeugt das Rahmenkennungswort RKW und den Systemtakt im Eigenbetrieb. Er überträgt im Eigenbetrieb die Daten vom Sende- in den Empfangsweg. Die Sendeeinheit SE bildet das Gegenstück zur Laufzeitausgleichseinheit LZS und ist den eigentlichen Busschnittstellen Optik, Funk oder Bündel vorgeschaltet. Sie ermöglicht das Überschreiben von Zeitkanalinhalten, z.B. Dienstkanal, was für das Netzmanagement erforderlich ist. Die Daten werden in Senderichtung ohne nennenswerte Verzögerung an die Sender weitergeleitet; symbolisiert durch die Durchschalteinrichtung DSE.

Das Netzmanagement und die Ermittlung, welche der Busstationen als taktgebende Busstation BST betrieben wird, erfolgt über einen Dienstkanal, welcher in Opposition zum Rahmenkennungswort RKW steht (Laufzeitminimierung). Dieser Dienstkanal wird in jedem Netzknoten mit der Stationsadresse und der Adresse der taktgebenden Station neu beschrieben (Multiplexen des Dienstkanalinhalts). Schließt sich eine neue Station an das Netz an, so wertet sie den Inhalt des Dienstkanals aus und stellt sich entsprechend ein. Während der Einstellphase sendet sie selbst eine Initialisierungskennung an allen anderen Anschlüssen aus, um andere Busstationen die Übergangsphase anzuzeigen.

Läuft in jedem Netzknoten der Rahmengenerator RG nur taktsynchron, entstehen beim Umschalten auf Fremdtakt keine Synchronismusausfälle mehr. Eine Netzumkonfiguration muß den anderen Busstationen daher über eine Dienstkanalkennung mitgeteilt werden.

Folgende Möglichkeiten bietet der gemultiplexte Dienstkanal:

- sanftes Herunterfahren des Netzes (z.B. bei Stellungswechsel),
- definiertes Schalten und Lösen von Netzverbindungen,
- automatische Netzkonfiguration unter Berücksichtigung von Laufzeiten,
- Übersicht über geschaltete und logisch getrennte Verbindungen mit entsprechenden Partneradressen (graph. Netztopologie),
- Anschaltung weiterer Busstationen ohne Netzstörungen.

Letztere Merkmale lassen sich insbesondere über einen optischen Anschluß realisieren, welcher mit ca. drei verschiedenen Inhalten für den Dienstkanal beschrieben werden kann und diese im Wechsel für jeden Rahmen aussendet.

In Fig. 8 sind für die gleiche Netzkonfiguration wie in Fig. 2 die Systemlaufzeiten für die erfindungsgemäße zeitkanalsynchrone Zusammenfassung der Daten dargestellt.

Im Sendeweg wird für jeden Netzknoten eine Durchlaufzeit von 4 $\mu$s (ca. 2 Zeitkanäle) angenommen. Die Netzknoten senden im Empfangsweg die Daten ohne Veränderung wieder aus, so daß es hier nur zu Verzögerungen in Größenordnung von Gatterlaufzeiten (Nanosekundenbereich) kommt. Zum Zeitpunkt O $\mu$s wird ein Rahmen mit eingeschleusten Daten von der Endstelle E1 ausgesendet. Diese Daten stehen zum Zeitpunkt 16 $\mu$s auf der Empfangsleitung für die Endstelle E1 zur Verfügung. Die Systemlaufzeit ist abhängig von der Position der zur jeweiligen Busstation taktgebenden Busstation. Deshalb beträgt für die Endstelle E2 die Systemlaufzeit nur 8 $\mu$s. Im Vergleich zu den Verzögerungen des Systems gemäß Fig. 2 werden die Einsparungen in der Systemlaufzeit deutlich: Systemlaufzeit bei Zeitkanalsynchronisation: 16 $\mu$s, Systemlaufzeit bei Rahmensynchronisation: 1375 $\mu$s.

Dies bedeutet eine Verringerung der Systemlaufzeit um 1359 $\mu$s, entsprechend 98,8 %.

Folgende Vorteile stellen sich durch die verringerte Systemlaufzeit ein:
- Kollisionen können erst nach Ablauf der Systemlaufzeit erkannt werden, d.h. bei Zeitkanalsynchronisation ist der nächste Belegungsversuch bereits nach kurzer Zeit möglich.
- Jeder Netzteilnehmer erhält durch die kurze Systemlaufzeit Verarbeitungszeit bis zum nächsten Zugriff auf den Zeitkanal, die sich folgendermaßen ergibt:

Verarbeitungszeit = Rahmendauer - Systemlaufzeit.

Für die Endstelle E1 gilt beispielsweise:

Verarbeitungszeit = 500 $\mu$s - 16 $\mu$s = 484 $\mu$s.

Zu beachten ist, daß beim Verfahren nach der Erfindung die Daten auf den Sende- und Empfangsleitungen in unterschiedlichen Zeitkanälen zu finden sind.

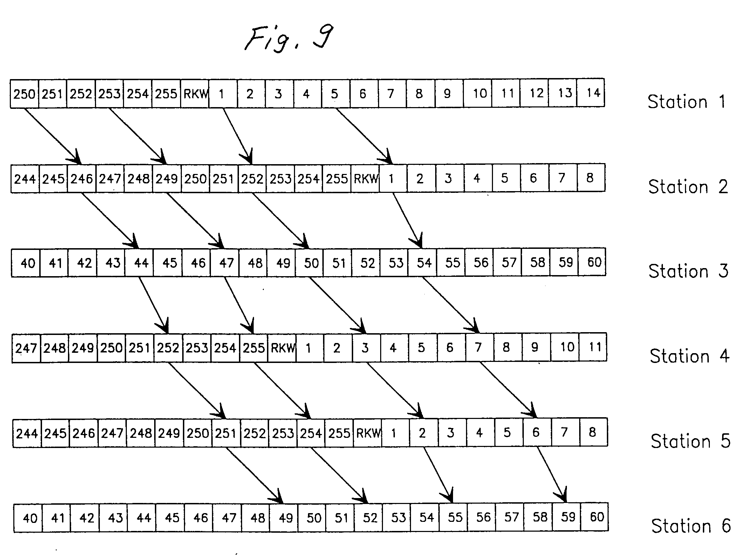

Nach einer Ausgestaltungsmöglichkeit der Erfindung werden zur richtigen Zuordnung der Zeitkanäle für Sende- und Empfangsweg die Laufzeiten aus der Netztopologie ermittelt und es erfolgt eine fest vereinbarte Zuordnung zwischen den Rahmen bezüglich Sende- und Empfangsweg, d.h. der Zeitversatz (Offset) wird fest vorgegeben und ist den jeweiligen Busstationen bekannt. Bei einer anderen Ausgestaltungsmöglichkeit nach der Erfindung ermittelt jede Busstation den Zeitversatz (Offset) der Zeitkanäle zwischen Sende- und Empfangsleitung selbst. Für die Ermittlung des Offset muß jede Busstation eine Kontrollbelegung durchführen. Dazu sendet sie in einen vorbestimmten Zeitkanal ihre Kennung aus und überwacht die Zeitkanäle auf der Empfangsleitung. Nach Empfang der Kennung auf der Empfangsleitung kann der Offset zwischen Sende- und Empfangsleitung bestimmt werden. Dabei ist zu beachten, daß jeder Netzknoten das Rahmenkennwort RKW neu einfügt. Fig. 9 zeigt für 6 Stationen den jeweiligen Zeitversatz und die Verschiebung der Rahmen (erkenntlich am Rahmenkennungswort RKW). Die Rahmengeneratoren RG der Busstationen sind also nicht rahmensynchronisiert. Die Offset-Ermittlung muß über eine Fallunterscheidung durchgeführt werden:
1. Empfangszeitkanal größer als (bzw. gleich) Sendezeitkanal Offset = Empfangszeitkanal - Sendezeitkanal,
2. Empfangszeitkanal kleiner als Sendezeitkanal Offset = Anzahl Nutzkanäle + Empfangszeitkanal - Sendezeitkanal.

Sobald der Offset bestimmt ist, kann jedem Sendezeitkanal ein Empfangszeitkanal zugeordnet werden:

Empfangszeitkanal = Sendezeitkanal + Offset.

Erhält der Empfangszeitkanal einen Wert größer als die Anzahl der Nutzkanäle, so muß folgende Korrektur angewendet werden:

Empfangszeitkanal = Sendezeitkanal + Offset - Anzahl Nutzkanäle.

Die Nutzkanäle bilden sich aus der Anzahl Zeitkanäle abzüglich der Zahl der reservierten Kanäle (beispielsweise dem für das Rahmenkennungswort reservierten Zeitkanal). Die 256 Zeitkanäle des bestehenden Systems bilden 255 Nutzkanäle. Der Dienstkanal, der in Opposition zum Rahmenkennungswort RKW steht, muß nicht berücksichtigt werden.

Der Vorteil dieser Methode:
- Keine Rahmensynchronisation der Rahmengeneratoren bei Fremdtakt erforderlich,
- Fremdtaktanschluß ohne Synchronismusverlust für das nachfolgende Netz.

Zu beachten ist bei dieser Methode folgendes:
- Eine Netzänderung muß jeder Busstation zuerst bekanntgemacht werden,

- Nach jeder Netzänderung ist eine Kontrollbelegung bei allen Busstationen erforderlich.

Als Daten können beispielsweise digital aufbereitete Sprachsignale, Bildsignale, Steuersignale, Fernwirksignale, Rechnerdaten usw. übertragen werden.

**Patentansprüche**

1. Zeitmultiplex-Übertragungssystem für Daten, bestehend aus mehreren Teilnetzen mit jeweils einem Datenbus (EL, SL) über den Teilnehmer (TE) in Zeitkanälen eines Rahmens Daten empfangen und absenden können, wobei mindestens eine Verzweigung (K1, K2, K3, ...) vorgesehen ist, der mindestens eine Laufzeitausgleichseinheit (LZS) zugeordnet ist zur Verzögerung von Daten mindestens eines Datenbusses (EL, SL) und wobei Mittel (KF) zur Verknüpfung der Datenströme mindestens zweier Teilnetze vorgesehen sind zur Einspeisung der verknüpften Datenströme in letztere oder weitere Teilnetze,
dadurch gekennzeichnet,
daß die Laufzeitausgleichseinheit (LZS) so ausgebildet oder so steuerbar ist, daß die Daten für die Verknüpfung in Senderichtung so verzögert werden, daß sie zeitkanalsynchron zusammenfassbar sind, wobei die Verzögerung pro Verzweigung höchstens der Dauer weniger Zeitkanäle entspricht.

2. Übertragungssystem nach Anspruch 1, dadurch gekennzeichnet, daß in einer Verzweigung (K1, K2, K3, ...) pro angeschlossenem Datenbus (EL, SL) eine Laufzeitausgleichseinheit (LZS), eine Sendeeinheit (SE) sowie ein Koppelfeld (KF) zur Verknüpfung der Datenströme der Teilnetze nach einer logischen ODER-Funktion vorgesehen ist, daß die Laufzeitausgleichseinheit (LZS) einen Empfangspuffer (EP) mit einer zugehörigen Steuereinheit umfaßt, mittels derer die Daten in Senderichtung zeitkanalsynchron an das Koppelfeld (KF) abgebbar sind.

3. Übertragungssystem nach Anspruch 1 oder 2, dadurch gekennzeichnet, daß zur Ermittlung des Zeitversatzes (Offset) zwischen Sende- und Empfangsweg eine Kontrollbelegung mit Stationskennung durchführbar ist.

4. Übertragungssystem nach Anspruch 3, dadurch gekennzeichnet, daß eine bei einer Verzweigung (K1, K2, K3, ...) vorgesehene Busstation (BS) in einem vorgegebenen Zeitkanal im Sendeweg ihre Stationskennung aussendet und im Empfangsweg diese Stationskennung zur Ermittlung des Zeitversatzes (Offset) zwischen Sende- und Empfangsweg auswertet.

5. Übertragungssystem nach einem der Ansprüche 1 bis 4, dadurch gekennzeichnet, daß die Verknüpfung von Zeitkanälen aus verschiedenen Teilnetzen in einer Verzweigung unabhängig von ihrer ursprünglichen Lage im Rahmen vorgenommen wird und daß zur richtigen Zuordnung der Zeitkanäle für Sende- und Empfangsweg der jeweilige Zeitversatz (Offset) herangezogen wird.

6. Übertragungssystem nach einem der Ansprüche 1, 2 oder 5, gekennzeichnet durch eine fest vereinbarte Zuordnung / ein fest vorgegebener Zeitversatz zwischen den Rahmen bezüglich Sende- und Empfangsweg.

7. Übertragungssystem nach einem der Ansprüche 1 bis 5, dadurch gekennzeichnet, daß die Zuordnung zwischen den Rahmen bezüglich Sende- und Empfangsweg anhand des ermittelten Zeitversatzes (Offset) bei einer Kontrollbelegung erfolgt.

8. Zeitmultiplex-Übertragungssystem nach einem der Ansprüche 1 bis 7, dadurch gekennzeichnet, daß im Übertragungssystem gleich aufgebaute Busstationen (BST, BS) vorgesehen sind, die durch entsprechende Einstellung oder Steuerung als taktgebende Station (BST) für das Zeitmultiplex-Übertragungssystem, als Verzweigung (K1, K2, K3, ...), bzw. Netzknoten, oder als Teilnehmerendstelle (TE) betreibbar sind.

| RKW | ZK 1 | ZK 2 | ZK 3 | ZK 4 | ZK 5 | | ZK 252 | ZK 253 | ZK 254 | ZK 255 |
|-----|------|------|------|------|------|-----|--------|--------|--------|--------|

Fig. 1

EP 0 603 635 A2

| RKW/1 | RKW/2 | 1/1 | 1/2 | 2/1 | 2/2 | 3/1 | 3/2 | 4/1 | 4/2 | 5/1 | 5/2 |
|-------|-------|-----|-----|-----|-----|-----|-----|-----|-----|-----|-----|

| 253/1 | 253/2 | 254/1 | 254/2 | 255/1 | 255/2 | RKW/1 | RKW/2 | 1/1 | 1/2 | 2/1 | 2/2 |
|-------|-------|-------|-------|-------|-------|-------|-------|-----|-----|-----|-----|

Fig. 7

■ ⸬ 0us ⟶    ■ ⸬ 55us ⟶    ▦ ⸬ 110us ⟶    ▦ ⸬ 165us ⟶

| taktgebende Station *BST* | EL ⟶ | Netz-knoten *K3* | EL ⟶ | Netz-knoten *K2* | EL ⟶ | Netz-knoten *K1* | EL ⟶ | Endstelle *E1* |
|---|---|---|---|---|---|---|---|---|
| | ⟵ SL | | ⟵ SL | | ⟵ SL | | ⟵ SL | |

⟵ ⸬ 310us ▦
⟵ ⸬ 810us ▦
⟵ ⸬ 1310us ▦

⟵ ⸬ 365us ▦
⟵ ⸬ 865us ▦

⟵ ⸬ 420us ▦

⟵ 290us ■

235 us ↑ ▦

Endstelle *E2*

*Fig. 2*

Richtung taktgebende
Station

| ZK3 | | RKW | | ZK.5 |
|-----|--|-----|--|------|
| ZK.4 | | ZK.1 | | ZK.6 |
| ZK.5 | ...... | ZK.2 | ...... | ZK.7 |
| ZK.6 | ...... | ZK3 | ...... | ZK.8 |
| ZK.7 | ...... | ZK.4 | ...... | ZK.9 |
| ZK.8 | ...... | ZK.5 | ...... | ZK.10 |
| ZK.9 | ...... | ZK.6 | ...... | ZK.11 |
| ZK.10 | ...... | ZK.7 | ...... | ZK.12 |
| ZK.11 | ...... | ZK.8 | ...... | ZK.13 |
| ZK.12 | ...... | ZK.9 | ...... | ZK.14 |
| | | ZK.10 | | |

ankommende
Sendeleitung

ankommende
Sendeleitung

Fig. 3

Fig. 4

Busstation

| | |
|---|---|
| BS E | |

Koppelfeld
*KF*

RG

| LZS | O P T I K |
|---|---|
| SE | |

IF1

| LZS | O P T I K |
|---|---|
| SE | |

IF2

| LZS | F U N K |
|---|---|
| SE | |

IF3

SL
EL

SL
EL

SL
EL

*Fig. 5*

EP 0 603 635 A2

Fig. 6

EP 0 603 635 A2

16us        16us        16us        16us

| taktgebende Station BST | EL → / ← SL | Netz-knoten K3 | EL → / ← SL | Netz-knoten K2 | EL → / ← SL | Netz-knoten K1 | EL → / ← SL | Endstelle E1 |

12us        8us        4us        0us

0us        8us

Endstelle E2

Fig. 8

Fig. 9